# EUROPEAN PATENT SPECIFICATION

(11) **EP 3 421 373 B1**
(45) Date of publication and mention of the grant of the patent: **24.03.2021**
(21) Application number: 18179862.0
(22) Date of filing: 26.06.2018
(51) Int. Cl.: B64D 33/02, F02C 7/045, F02C 7/042

(54) **ROTATING DEVICES FOR MITIGATION OF ADVERSE FLOW CONDITIONS IN AN ULTRA-SHORT NACELLE INLET**
DREHBARES VORRICHTUNGEN ZUR MINDERUNG UNERWÜNSCHTER STRÖMUNG BEDINGUNGEN IN EINEM ULTRA KURZEN GONDEL
DISPOSITIFS ROTATIFS POUR ATTENUER DES CONDITIONS DE FLUX INDESIRABLES DANS UNE NACELLE ULTRA-COURTE

(30) Priority: 26.06.2017 US 201715633523
(43) Date of publication of application: 02.01.2019
(73) Proprietor: The Boeing Company, Chicago, IL 60606-1596 (US)
(72) Inventor: DORSEY, Andrew M., Chicago, IL 60606-1596 (US); HOFFMAN, Drew C., Chicago, IL 60606-1596 (US); PALACIOS, Francisco D., Chicago, IL 60606-1596 (US); HOISINGTON, Zachary C., Chicago, IL 60606-1596 (US)
(74) Representative: Bartelds, Erik

(56) References cited:
- EP-A2- 1 988 266
- EP-A2- 2 003 310
- US-A- 3 652 036
- US-A- 3 770 228
- US-B1- 6 260 567

## Description

### BACKGROUND INFORMATION

### Field

Exemplary embodiments of the disclosure relate generally to aerodynamic flow control for turbofan aircraft nacelles and more particularly to flow control devices on the leading lip of ultra-short nacelles.

### Background

Turbofan engines are widely employed for large commercial aircraft. As engines become larger and fans become wider, nacelles housing the fans must become shorter to achieve lower fuel burns (lower drag and weight). However, shorter nacelles, especially the resulting shorter inlets means that at adverse conditions such as high angles of attack (takeoff and over-rotation) or crosswind conditions the flow is more likely to separate behind the leading edge of the short inlet. The short inlet's smaller leading edge radius, and other features, makes it more difficult for flow to stay attached when airflow entering the engine must turn before heading in a direction approximately normal to the fan-face. If the flow separates at the leading-edge of the nacelle, the resulting flow distortion (total pressure decrease) at the fan-face is undesirable. The separated flow may reduce performance, increase noise, and require heavier support structure to mitigate aerodynamically induced vibration. Existing solutions include simply making the inlet longer and adding a thicker lip. Alternatively blow-in doors used earlier nacelle designs may be employed. However, making the inlet longer is not an optimal solution with very large engine diameters as it reduces effectiveness of the larger engine by creating excess drag and weight. Blow-in doors increase emitted noise from aircraft operations and are structurally complex. It is therefore desirable to provide alternative solutions for inlet flow control which overcome the constraints of prior art solutions and provide improved performance.

US 3 652 036 A discloses a forced air intake for vehicles and more particularly for highspeed subsonic aircraft which comprises a frontal opening bounded by a profile the shape of which is determined as a function of the laws of aerodynamics brought into play when the vehicle is travelling at its nominal speed. This air intake usually cooperates with a turbojet for propelling the vehicle. The air intake comprises a plurality of movable flaps arranged over the outer surface of the profile, adjacent its leading edge. In their retracted position, the movable flaps restore the contour of the profile. In their extended position, the movable flaps define an intake horn for the air intake and a succession of convergent passages between their inner surfaces and the outer surface of the profile.

US 3 770 228 A discloses a series of inlet fences or spoilers carried on the nacelle of an aircraft turbine engine which are used to selectively divert streamlines which would otherwise become detached at the inlet lip. This selectively variable air-inlet geometry provides for minimum drag during cruise and yet obviates engine surge or stall or other effects detrimental to the engine which could otherwise occur on the ground and at low forward velocity when crosswinds combine with high engine power demands.

And EP 2 003 310 A2 discloses a nacelle which includes leading edge slats movable to modify inlet shape and area airflow into the nacelle. The articulating leading edge slats are movable for tailoring incoming airflow to current aircraft operating conditions. An actuator disposed within a thickness of the nacelle drives leading edge slats to a desired position to vary the inlet area and shape.

### SUMMARY

As disclosed herein, an engine nacelle according to claim 1 has a flow control system mounted thereon. The flow control system comprises a plurality of flow control devices each having a body, a curved, blunt nose and a trailing edge. The system further comprises a plurality of actuators, each actuator coupled to the body of at least one associated flow control device. Each actuator is configured to rotate the body about a leading edge of an inlet of the nacelle from a retracted position in which the nose of the associated flow control device lies aft of the leading edge of the inlet of the nacelle to an extended position in which the nose lies forward of said leading edge.

Further embodiments of the disclosed engine nacelle having the flow control system mounted thereon are defined in dependent claims 2-10.

The embodiments disclosed provide a method for inlet flow control on an engine nacelle according to claim 11, which comprises extending a plurality of flow control devices on the nacelle by rotating a body of each flow control device about a leading edge of an inlet of the nacelle in at least one lower quadrant of an inlet circumference to accommodate a high angle of attack of the inlet of the nacelle. The body of each flow control device is rotated from a retracted position in which a curved, blunt nose of said flow control device lies aft of the leading edge of the inlet of the nacelle to an extended position in which the nose lies forward of said leading edge.

Further embodiments of the disclosed method form the subject matter of dependent claims 12-15.

### BRIEF DESCRIPTION OF THE DRAWINGS

The features, functions, and advantages desired can be achieved independently in various embodiments of the present disclosure or may be combined in yet other embodiments, further details of which can be seen with reference to the following description and drawings.
FIG. 1 is pictorial representation of a commercial aircraft with high bypass ratio turbofan engines;
FIG. 2A is a pictorial detail of the turbofan engine nacelle as mounted on the aircraft wing;
FIG. 2B is a partial section view of the inlet nacelle with an exemplary embodiment of the inlet flow control device as deployed demonstrating relative sizing of the flow control device and nacelle;
FIG. 2C is a first detailed side view of the inlet flow control device in the deployed position;
FIG. 2D is a second detailed lower angle pictorial view showing features of the inlet flow control device in the deployed position;
FIG. 2E is a third detailed upper angle pictorial view showing features of the inlet flow control device in the deployed position;
FIG. 3A is a front pictorial view of the inlet nacelle and engine with the flow control device in the stowed or retracted position;
FIG. 3B is a side view of the inlet nacelle and engine with the flow control device in the stowed or retracted position;
FIG. 3C is a rear pictorial view of the inlet nacelle and engine with the flow control device in the stowed or retracted position;
FIG. 3D is a detailed upper angle pictorial view showing features of the inlet flow control device in the stowed position;
FIG. 4A is a front pictorial view of the inlet nacelle and engine with the flow control device in a partially deployed position;
FIG. 4B is a side view of the inlet nacelle and engine with the flow control device in a partially deployed position;
FIG. 4C is a rear pictorial view of the inlet nacelle and engine with the flow control device in a partially deployed position;
FIG. 4D is a detailed side view showing features of the inlet flow control device in a partially deployed position;
FIG. 5A is a front pictorial view of the inlet nacelle and engine with the flow control device in a fully deployed position;
FIG. 5B is a side view of the inlet nacelle and engine with the flow control device in a fully deployed position;
FIG. 5C is a rear pictorial view of the inlet nacelle and engine with the flow control device in a fully deployed position;
FIG. 6 is a front view of the turbofan engine as mounted on the wing adjacent the fuselage with the flow control device in a fully deployed position;
FIG. 7 is a flow chart depicting a method for flow control in a turbofan engine having a short inlet..

### DETAILED DESCRIPTION

The exemplary embodiments described herein provide flow control devices for adverse flow conditions in an ultra-short nacelle inlet to solve the problem of flow distortion on the fan for a larger turbofan engine. The flow control devices are a deployable aerodynamic structure, similar to a Krueger flap on an aircraft wing, that is deployed to extend from a leading edge of the nacelle to increase the effective leading edge radius of the nacelle and give incoming air flow a better turning angle to decrease or control flow separation in off- nominal conditions such as crosswind and high angles of attack. The resulting variable geometry inlet deals with low speed high angle-off-attack problems of separated flow, while still preserving the short nacelle in the retracted position to maintain cruise performance and the overall optimum performance of the larger engine.

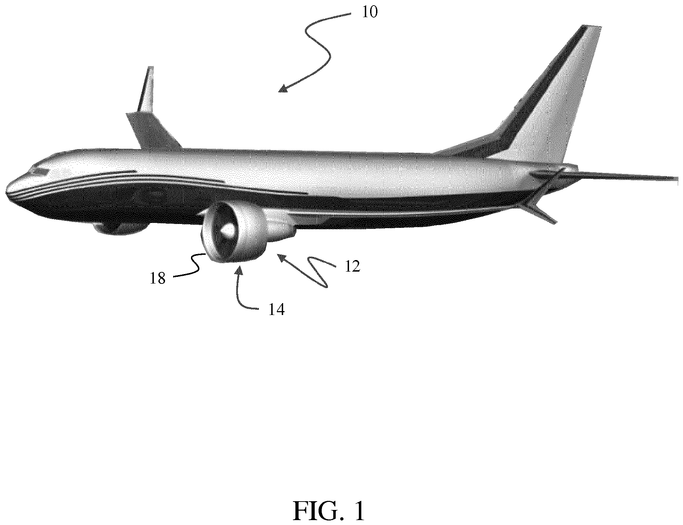

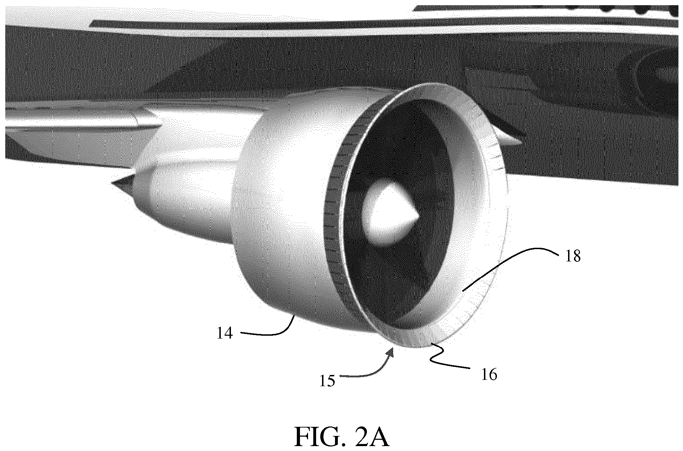

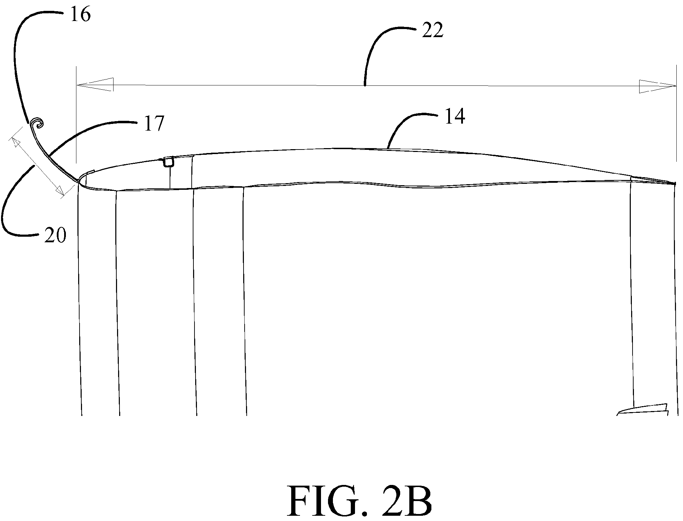

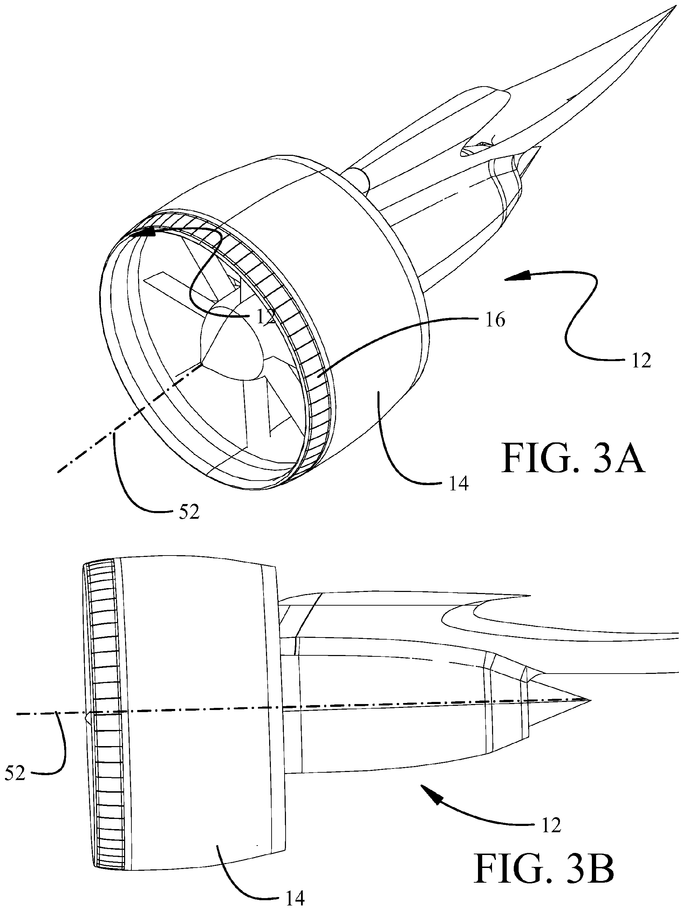

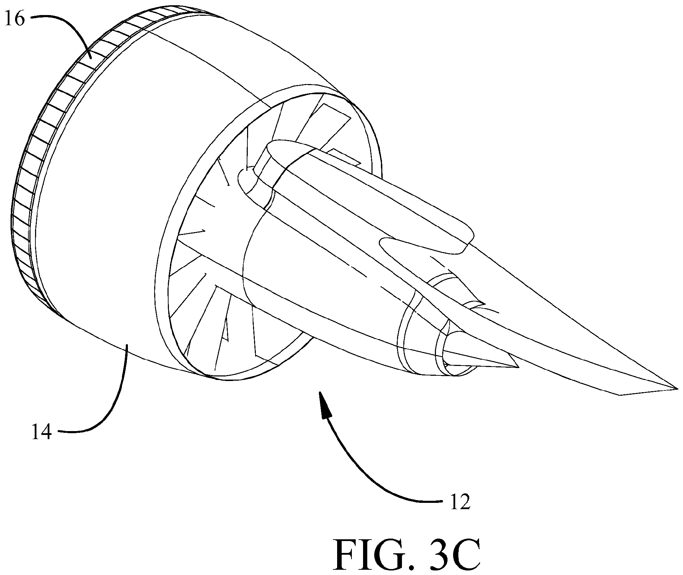

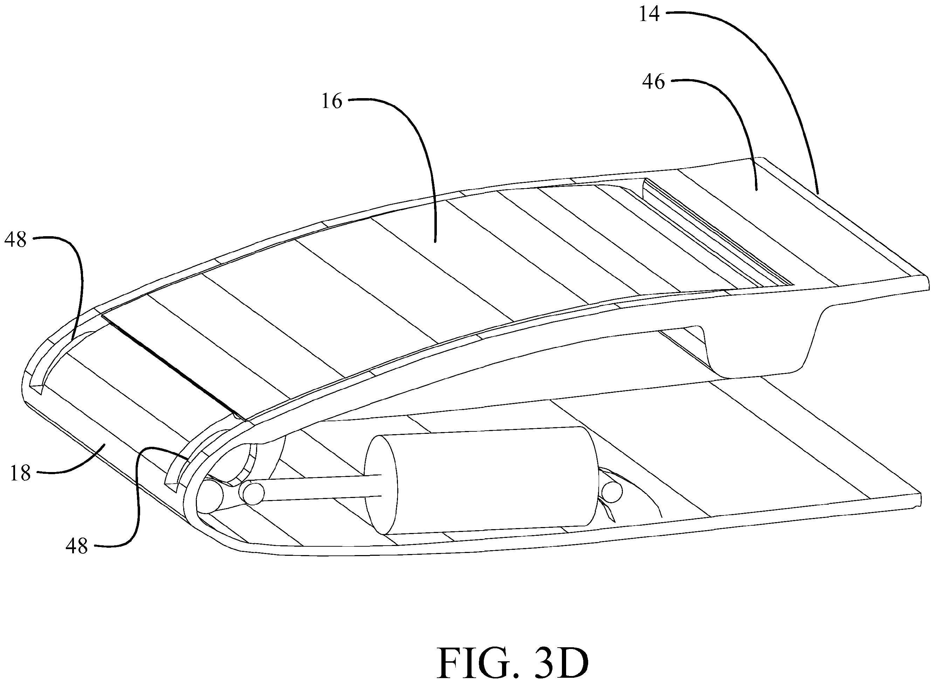

Referring to the drawings, FIG. 1 depicts a large commercial aircraft 10 employing high bypass ratio turbofan engines 12 having ultra-short nacelles 14. A radial array 15 of individual flow control devices 16 providing a flow control system are deployed at the leading edge 18 of the nacelle 14 as seen in FIG. 2A (only the flow control device 16 in perpendicular section is shown deployed for clarity). Each flow control device 16 has a cambered body 17 rotatable from a stowed position as seen in FIGs. 3A-3D (described in greater detail subsequently) to the fully deployed position seen in FIG. 2A and in detail in FIG. 2B. Each flow control device 16 has a chord length 20 which is nominally 2.5 to 25% of the nacelle length 22.

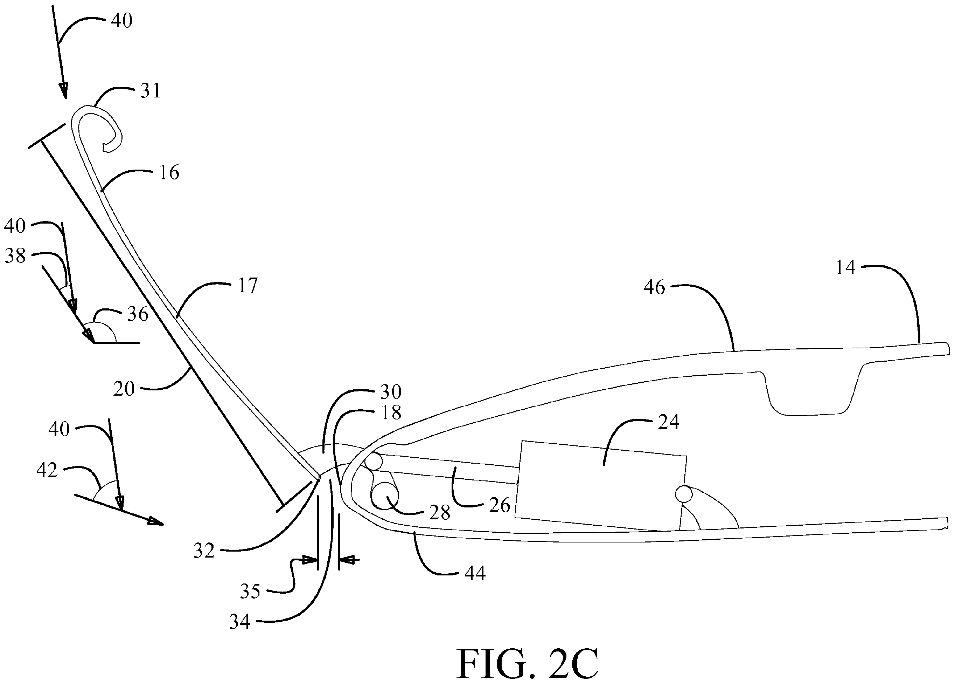

FIGs. 2C-2E show the flow control device 16 in greater detail. Each flow control device 16 is rotated from the stowed to deployed position by an actuator 24 having an actuating rod 26 connected to the body of the flow control device 16, The flow control device 16 is then rotated about an axle 28 which supports the flow control device with lever arms 30 attached to the body 17 proximate a trailing edge 32 (in the deployed position). In alternative embodiments the axle 28 may incorporate one or more rotating shape memory alloy (SMA) tubes or similar devices for actuation. While the actuator 24 and associated actuating rod 26 are shown as attached to one of two lever arms 30, in alternative embodiments, a single lever arm 30 may be centrally connected to the body 17 of each flow control device 16. Similarly, mechanical linkages may be employed to join adjacent flow control devices 16 and individual actuators 24 may rotate multiple flow control devices 16.

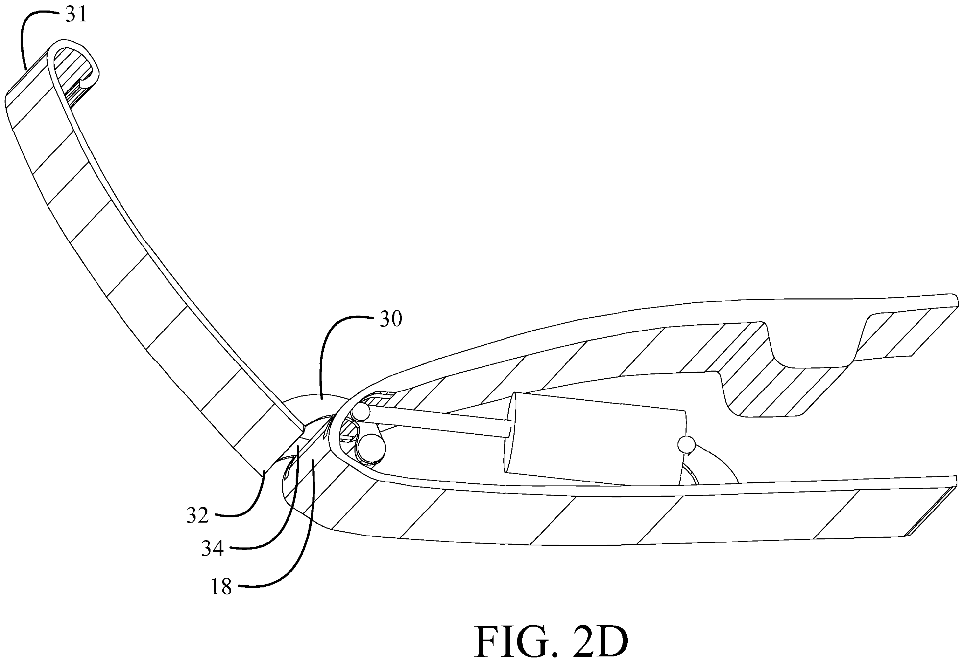

The lever arms 30 are configured to maintain the nacelle leading edge 18 and flow control device trailing edge 32 in a spaced relationship providing a flow slot 34 with a width 35 of approximately 0.5 to 5% of the body chord length 20 ((best seen in FIG. 2D and exaggerated in the drawing for clarity). Deployment of the flow control devices 16 increases the effective camber of the leading edge of the nacelle. Additionally, cambered shaping of the flow control device 16 from nose 31 to trailing edge 32 with angle of deployment 36 further enhances the significantly reduced initial turning angle 38 for an off-axis flow (such as a crosswind represented by arrows 40) with a smooth transition into the inlet as opposed to an initial turning angle 42 required by the aerodynamic internal contour 44 of the inlet without the deployed flow control device. While the embodiment shown provides camber in the flow control device 16, a flat contour maybe employed. The cambered contour provides additional benefit in aerodynamic smoothing of the flow control device 16 with the external contour 46 of the nacelle 14, as will be described in greater detail subsequently. A curved, blunt nose 31 aerodynamically assists air that is non-parallel to the flow control device turn onto the flow control device more easily.

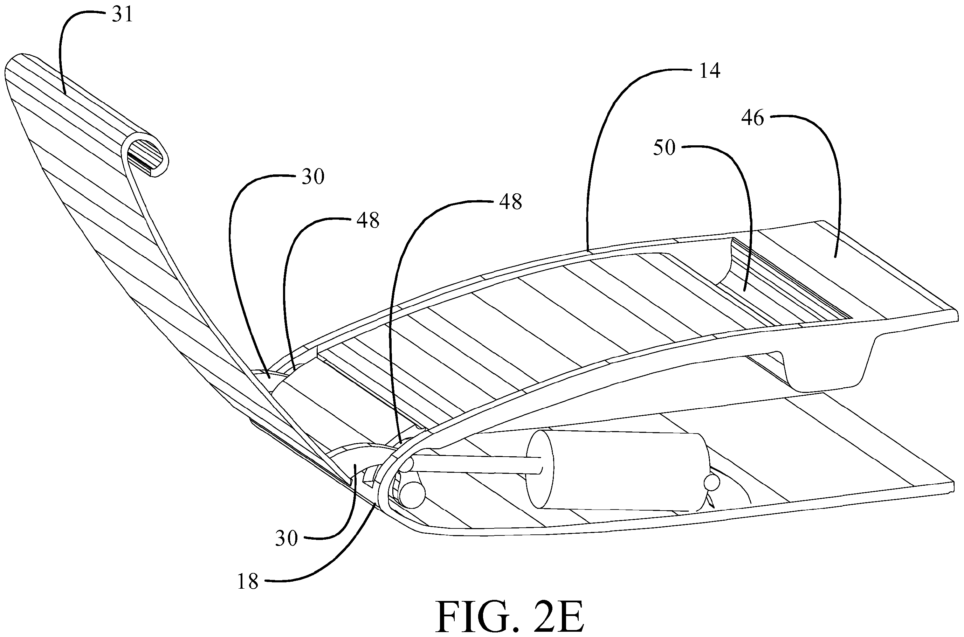

For the embodiment shown, the lever arms 30 extend through slots 48 in the nacelle leading edge 18 (best seen in FIG. 2E). As previously described a centrally located lever arm 30 may be attached to the flow control device 16 and extend through a single slot. A depressed pocket 50 in the external contour 46, seen in FIG. 2E, receives at least a portion of the flow control device 16 in the retracted position to provide a relatively flush transition between the nose 31 of the flow control device and the external contour 46 of the nacelle 14, as seen in FIGs. 3A-3D. Telescoping, jointed or pivoting mechanisms in the lever arms 30 may be employed to insert and engage the flow control device 16 within the pocket 50 during retraction to more closely meld with the external contour 46.

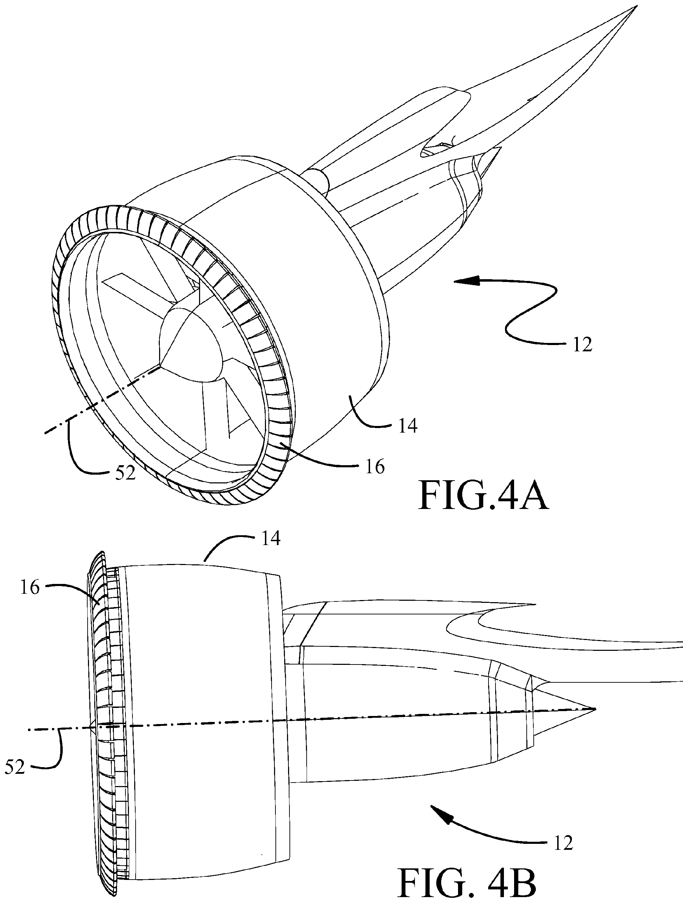

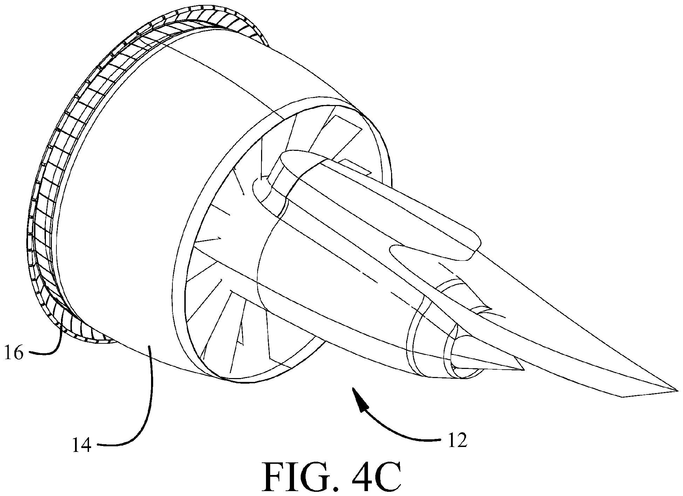

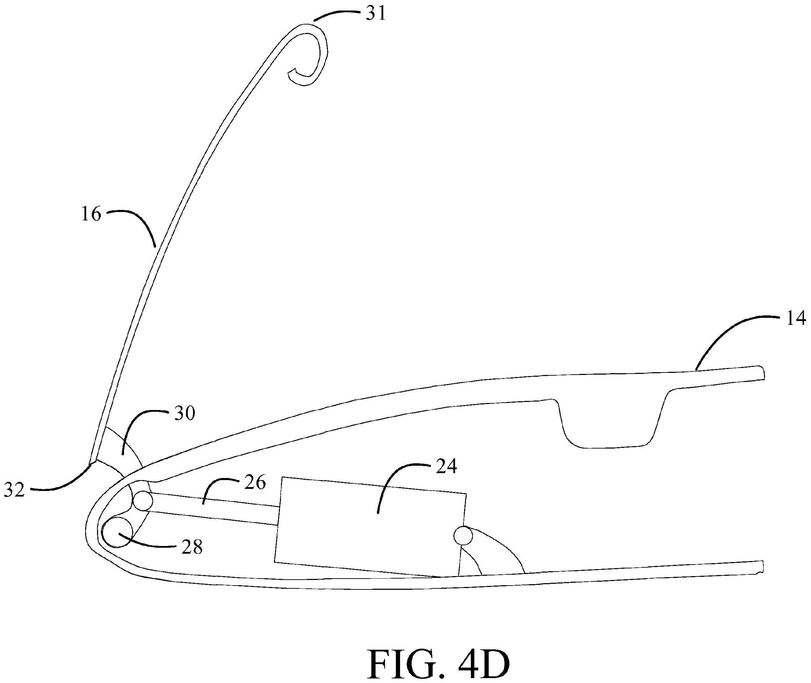

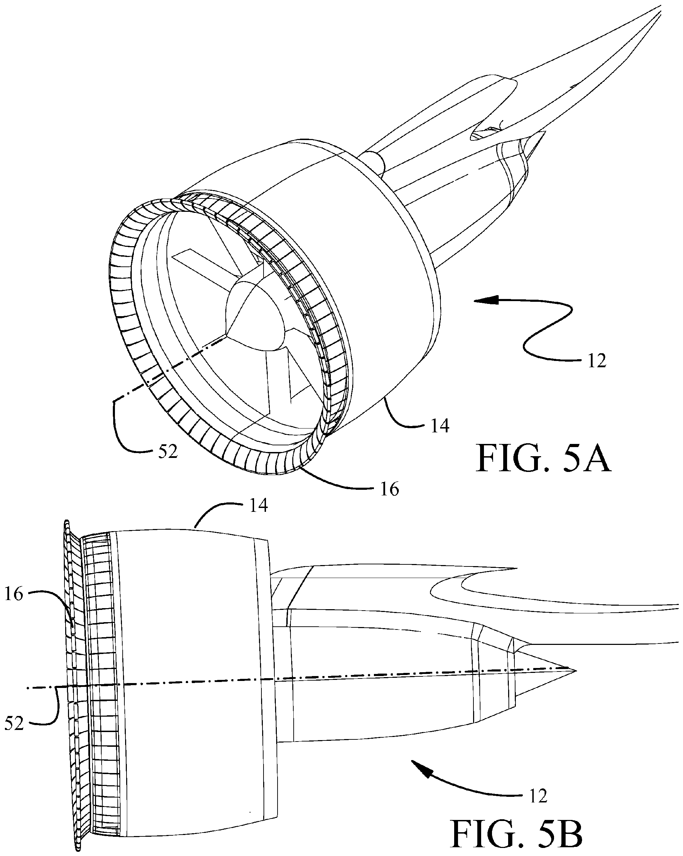

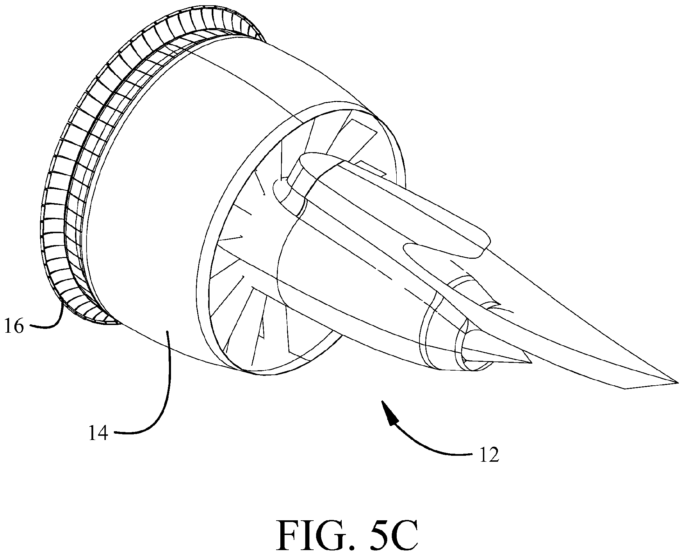

Deployment of the flow control devices 16 is demonstrated in the sequence of drawings in FIGs. 3A-3E (closed or retracted), FIGs. 4A-4C (partially extended/rotated) and FIGs. 5A-5C (fully rotated or extended). As displayed in this sequence, extension of the entire array of flow control devices 16 is symmetrical about a centerline axis 52 of the nacelle. However, in certain embodiments selectable positioning of the flow control devices 16 at various points through the range of rotation may be desirable for varying angle of attack or other issues.

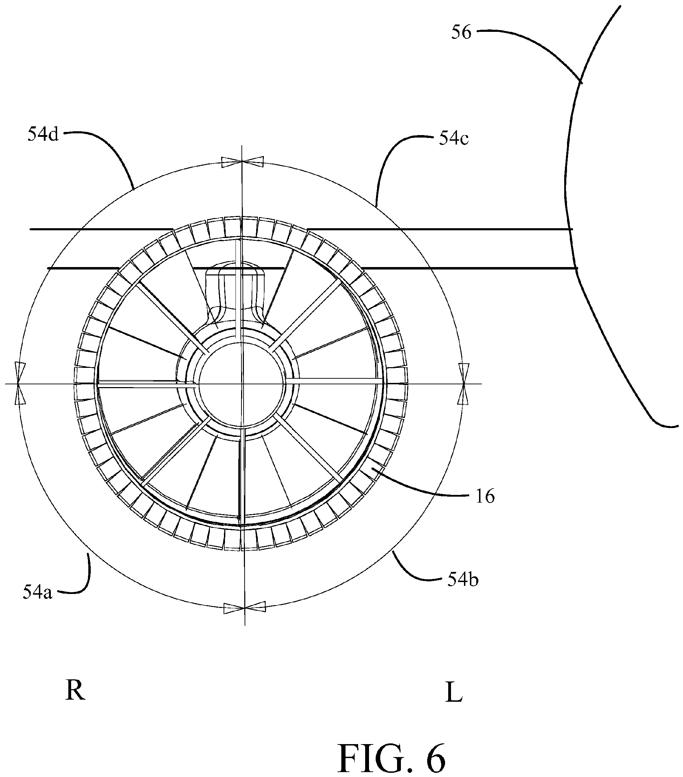

FIG. 6 shows the symmetrical extended configuration of the radial array 15 of flow control devices 16. As annotated in FIG. 6, quadrants 54a-54c around the nacelle may have differing aerodynamic conditions or effects created by angle of attack of the aircraft as a whole, cross winds, which may be partially shielded or mitigated by the fuselage 56 of the aircraft, or other aerodynamic phenomenon induced during flight, takeoff or landing of the aircraft. Each of the flow control devices 16 may be separately operable for extension and retraction. For high angle of attack operation of the aircraft, deployment of selectable groups of the flow control devices 16 in at least lower outboard and lower inboard quadrants 54a and 54b would likely be desirable. For a strong outboard cross wind from the right, R, of the aircraft (left on the drawings as a front view of the aircraft), deployment of the flow control devices grouped in lower and upper outboard quadrants 54a and 54d would be desirable. Similarly, for a strong inboard cross wind from the left, L, of the aircraft (right on the drawing) deployment of the flow control devices grouped in lower and upper inboard quadrants 54b and 54c may be desirable. However, presence of the fuselage 56 may block left cross wind flow and deployment of the flow control devices in upper inboard quadrant 54c may not be required. The descriptions herein are reversed for left and right designations for an engine mounted on the left side of the aircraft. Additionally, while shown in the drawings as equal quadrants, the "quadrants" may be interpreted as any selected arcuate segments of the circumference of the inlet.

For aircraft with certain operating conditions or engine mounting configurations, the array of flow control devices may be altered to include only active devices in lower quadrants 54a and 54b, or those quadrants plus a lower portion of quadrants 54c and 54d which would be sufficient to accommodate all needed aerodynamic conditions.

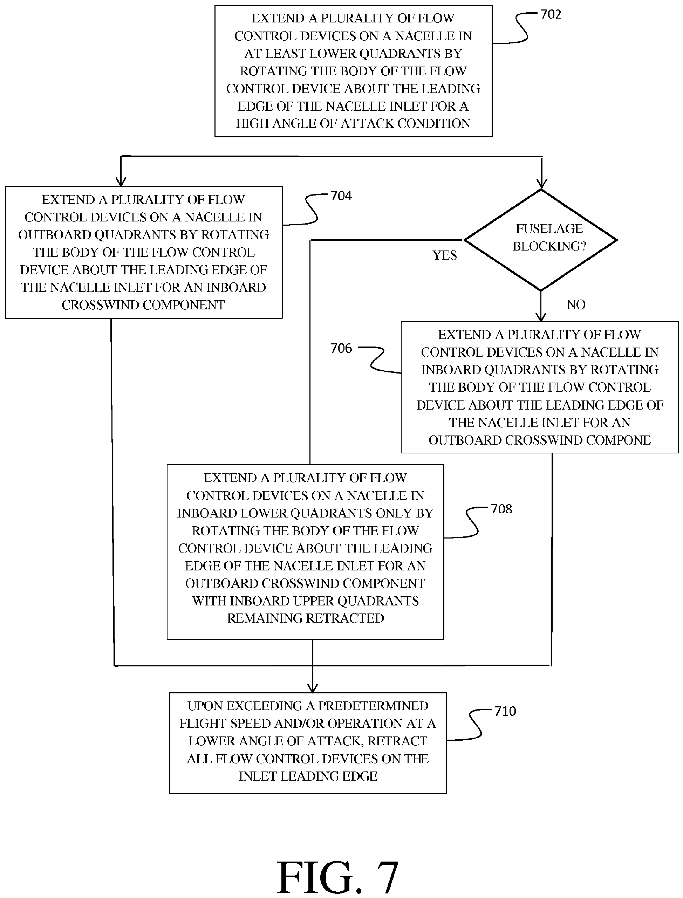

The embodiments disclosed herein provide a method for inlet flow control on an ultra-short turbofan engine nacelle as shown in FIG. 7. For an expected predetermined high angle of attack condition a plurality of flow control devices 16 on each engine may be extended in at least lower quadrants 54a, 54b of the inlet circumference by rotating the body 17 of each flow control device about the leading edge 18 of the nacelle inlet, step 702. With a predetermined outboard wind component (i.e. blowing from the outboard side of the nacelle) a plurality of flow control devices 16 may be extended in at least the outboard quadrants 54a, 54d of the inlet circumference, step 704. For a predetermined inboard cross wind component a plurality of flow control devices 16 may be extended in at least the inboard quadrants 54b, 54c of the inlet circumference, step 706, or where fuselage blocking or mitigation of the inboard cross wind is anticipated, flow control devices 16 in the upper inboard quadrant may remain retracted and only flow control devices 16 in the lower inboard quadrant are extended, step 708. Upon exceeding a predetermined flight speed and/or reducing operation to a lower angle of attack, all flow control devices 16 are retracted, step 710.

Having now described various embodiments of the disclosure in detail as required by the patent statutes, those skilled in the art will recognize modifications and substitutions to the specific embodiments disclosed herein. Such modifications are within the scope and intent of the present disclosure as defined in the following claims.

## Claims

1. An engine nacelle having a flow control system mounted thereon, the system comprising:
a plurality of flow control devices (16) each having a body (17), a curved, blunt nose (31) and a trailing edge (32); and
a plurality of actuators (24), each actuator coupled to the body of at least one associated flow control device and configured to rotate the body about a leading edge (18) of an inlet of the nacelle (14) from a retracted position in which the nose (31) of the associated flow control device lies aft of the leading edge of the inlet of the nacelle to an extended position in which the nose (31) lies forward of said leading edge.

2. The engine nacelle as defined in claim 1 wherein the body of each flow control device in the plurality of flow control devices has a chord length (20) from the nose to the trailing edge (32) of about 2.5% to 20% of a length of the nacelle.

3. The engine nacelle as defined in claim 1 or 2 further comprising an axle (28) for each flow control device, said axle connected to each body with at least one lever arm (30), said axle configured for rotation by at least one of the plurality of actuators.

4. The engine nacelle as defined in claim 3 wherein said at least one lever arm is configured to maintain a spaced relationship between the trailing edge (32) of said flow control device and the leading edge of the inlet of the nacelle such that a flow slot (34) is formed therebetween, and optionally wherein the flow slot has a slot width (35) of about 0.5% to 5% of a body chord length.

5. The engine nacelle as defined in any preceding claim wherein the body is cambered and optionally further comprising a pocket (50) in an external contour (46) of the nacelle shaped to receive at least a portion of the body with the nose (31) of said flow control device being substantially flush with the external contour of the nacelle.

6. The engine nacelle as defined in any preceding claim wherein a number of actuators of the plurality of actuators is equal to a number of flow control devices of the plurality of flow control devices, and optionally wherein each flow control device of the plurality of flow control devices is separately extendible.

7. The engine nacelle as defined in any preceding claim wherein selectable groups of the plurality of flow control devices are simultaneously extendible.

8. The engine nacelle as defined in claim 7 wherein at least two of the selectable groups are located in lower quadrants (54a, 54b) of a circumference of the inlet, wherein the at least two of the selectable groups in the lower quadrants are adapted to accommodate a high angle of attack of the inlet of the nacelle.

9. The engine nacelle as defined in claim 7 or 8 wherein at least two of the selectable groups are located in outboard quadrants (54a, 54d) of a circumference of the inlet, wherein the at least two of the selectable groups in the outboard quadrants are adapted to accommodate outboard crosswind at the inlet of the nacelle.

10. The engine nacelle as defined in any one of claims 7-9 wherein at least one of the selectable groups is located in an inboard quadrant (54b, 54c) of a circumference of the inlet, wherein the at least one of the selectable groups in the inboard quadrant is adapted to accommodate inboard crosswind at the inlet of the nacelle.

11. A method for inlet flow control on an engine nacelle comprising:
extending a plurality of flow control devices (16) on the nacelle by rotating a body (17) of each flow control device about a leading edge (18) of an inlet of the nacelle in at least one lower quadrant (54a, 54b) of an inlet circumference to accommodate a high angle of attack of the inlet of the nacelle, wherein the body of each flow control device is rotated from a retracted position in which a curved, blunt nose (31) of said flow control device lies aft of the leading edge of the inlet of the nacelle to an extended position in which the nose (31) lies forward of said leading edge.

12. The method of claim 11 further comprising extending a plurality of flow control devices in at least one outboard quadrant (54a, 54d) of the inlet circumference to accommodate a predetermined outboard wind component.

13. The method of claim 11 or 12 further comprising extending a plurality of flow control devices in at least one inboard quadrant (54b, 54c) of the inlet circumference to accommodate a predetermined inboard wind component.

14. The method of claim 11 or 12 further comprising extending a plurality of flow control devices in a lower inboard quadrant (54b) of the inlet circumference to accommodate a predetermined inboard wind component with a plurality of flow control devices in an upper inboard quadrant (54c) remaining retracted.

15. The method of any of claims 11 to 14 further comprising retracting all of the plurality of flow control devices upon exceeding a predetermined flight speed or operation at a lower angle of attack.

## Patentansprüche

1. Triebwerksgondel mit einem darauf montierten Strömungssteuersystem, wobei das System Folgendes umfasst:
eine Vielzahl von Strömungssteuereinrichtungen (16), die jeweils einen Körper (17), eine gekrümmte, stumpfe Nase (31) und eine Hinterkante (32) aufweisen; und
eine Vielzahl von Stellgliedern (24), die jeweils mit dem Körper wenigstens einer zugehörigen Strömungssteuereinrichtung gekoppelt sind und dazu konfiguriert sind, den Körper um eine Vorderkante (18) eines Einlasses einer Gondel (14) aus einer zurückgezogenen Position, in der die Nase (31) der zugehörigen Strömungssteuereinrichtung hinter der Vorderkante des Einlasses der Gondel liegt, in eine ausgefahrene Position zu drehen, in der die Nase (31) vor der Vorderkante liegt.

2. Triebwerksgondel nach Anspruch 1, wobei der Körper jeder Strömungssteuereinrichtung aus der Vielzahl von Strömungssteuereinrichtungen eine Profilsehnenlänge (20) von der Nase zu der Hinterkante (32) aufweist, die etwa 2,5 % bis 20 % der Länge der Gondel beträgt.

3. Triebwerksgondel nach Anspruch 1 oder 2, die weiterhin eine Achse (28) für jede Strömungssteuereinrichtung umfasst, wobei die Achse durch wenigstens einen Hebelarm (30) mit jedem Körper verbunden ist, wobei die Achse für eine Drehung durch wenigstens eines aus der Vielzahl von Stellgliedern konfiguriert ist.

4. Triebwerksgondel nach Anspruch 3, wobei der wenigstens eine Hebelarm dazu konfiguriert ist, eine beabstandete Beziehung zwischen der Hinterkante (32) der Strömungssteuereinrichtung und der Vorderkante des Einlasses der Gondel derart aufrecht zu erhalten, dass ein Strömungsspalt (34) dazwischen gebildet wird, und gegebenenfalls wobei der Strömungsspalt eine Spaltbreite (35) von etwa 0,5 % bis 5 % einer Profilsehnenlänge des Körpers aufweist.

5. Triebwerksgondel nach einem der vorhergehenden Ansprüche, wobei der Körper gewölbt ist und gegebenenfalls weiterhin eine Tasche (50) in einer Außenkontur (46) der Gondel umfasst, die so geformt ist, dass sie wenigstens einen Abschnitt des Körpers so aufnimmt, dass die Nase (31) der Strömungssteuereinrichtung im Wesentlichen bündig mit der Außenkontur der Gondel ist.

6. Triebwerksgondel nach einem der vorhergehenden Ansprüche, wobei eine Anzahl von Stellgliedern aus der Vielzahl von Stellgliedern gleich einer Anzahl von Strömungssteuereinrichtungen aus der Vielzahl von Strömungssteuereinrichtungen ist, und gegebenenfalls wobei jede Strömungssteuereinrichtung aus der Vielzahl von Strömungssteuereinrichtungen separat ausgefahren werden kann.

7. Triebwerksgondel nach einem der vorhergehenden Ansprüche, wobei auswählbare Gruppen aus der Vielzahl von Strömungssteuereinrichtungen gleichzeitig ausgefahren werden können.

8. Triebwerksgondel nach Anspruch 7, wobei wenigstens zwei der auswählbaren Gruppen sich in unteren Quadranten (54a, 54b) eines Umfangs des Einlasses befinden, wobei die wenigstens zwei der auswählbaren Gruppen in den unteren Quadranten dazu angepasst sind, einen großen Anstellwinkel des Einlasses der Gondel aufzunehmen.

9. Triebwerksgondel nach Anspruch 7 oder 8, wobei wenigstens zwei der auswählbaren Gruppen sich in äußeren Quadranten (54a, 54d) eines Umfangs des Einlasses befinden, wobei die wenigstens zwei der auswählbaren Gruppen in dem äußeren Quadranten dazu angepasst sind, einen äußeren Seitenwind am Einlass der Gondel aufzunehmen.

10. Triebwerksgondel nach einem der Ansprüche 7 bis 9, wobei wenigstens eine der auswählbaren Gruppen sich in inneren Quadranten (54b, 54c) eines Umfangs des Einlasses befindet, wobei die wenigstens eine der auswählbaren Gruppen in dem inneren Quadranten dazu angepasst ist, einen inneren Seitenwind am Einlass der Gondel aufzunehmen.

11. Verfahren zur Einlassströmungssteuerung einer Triebwerksgondel, wobei das Verfahren Folgendes umfasst:
Ausfahren einer Vielzahl von Strömungssteuereinrichtungen (16) an der Gondel durch Drehen eines Körpers (17) jeder Strömungssteuereinrichtung um eine Vorderkante (18) eines Einlasses der Gondel in wenigstens einem unteren Quadranten (54a, 54b) eines Einlassumfangs, um einen größeren Anstellwinkel des Einlasses der Gondel aufzunehmen, wobei der Körper jeder Strömungssteuereinrichtung aus einer zurückgezogenen Position, in der eine gekrümmte, stumpfe Nase (31) der Strömungssteuereinrichtung hinter der Vorderkante des Einlasses der Gondel liegt, in eine ausgefahrene Position gedreht wird, in der die Nase (31) vor der Vorderkante liegt.

12. Verfahren nach Anspruch 11, weiterhin umfassend das Ausfahren einer Vielzahl von Strömungssteuereinrichtungen in wenigstens einem äußeren Quadranten (54a, 54d) des Einlassumfangs, um eine vorbestimmte äußere Windkomponente aufzunehmen.

13. Verfahren nach Anspruch 11 oder 12, weiterhin umfassend das Ausfahren einer Vielzahl von Strömungssteuereinrichtungen in wenigstens einem inneren Quadranten (54b, 54c) des Einlassumfangs, um eine vorbestimmte innere Windkomponente aufzunehmen.

14. Verfahren nach Anspruch 11 oder 12, weiterhin umfassend das Ausfahren einer Vielzahl von Strömungssteuereinrichtungen in einem unteren inneren Quadranten (54b) des Einlassumfangs, um eine vorbestimmte innere Windkomponente aufzunehmen, während eine Vielzahl von Strömungssteuereinrichtungen in einem oberen inneren Quadranten (54c) eingefahren bleibt.

15. Verfahren nach einem der Ansprüche 11 bis 14, weiterhin umfassend das Zurückziehen aller aus der Vielzahl von Strömungssteuereinrichtungen, wenn eine vorbestimmte Fluggeschwindigkeit überschritten wird oder ein Betrieb in einem kleineren Anstellwinkel stattfindet.

## Revendications

1. Fuseau réacteur doté d'un système de régulation du débit d'air monté sur celui-ci, le système comprenant :
une pluralité de dispositifs de régulation du débit d'air (16) présentant chacun un corps (17), un nez incurvé mousse (31) et un bord de fuite (32), et
une pluralité d'actionneurs (24), chaque actionneur étant couplé au corps d'au moins un dispositif de régulation du débit d'air associé et étant conçu pour faire subir une rotation au corps autour du bord d'attaque (18) de l'entrée d'un fuseau (14) en le faisant passer d'une position rétractée dans laquelle le nez (31) du dispositif de régulation du débit d'air associé est situé sur l'arrière par rapport au bord d'attaque de l'entrée du fuseau à une position déployée dans laquelle le nez (31) est situé sur l'avant par rapport audit bord d'attaque.

2. Fuseau réacteur selon la revendication 1, dans lequel le corps de chaque dispositif de régulation du débit d'air de la pluralité de dispositifs de régulation du débit d'air a une longueur de corde (20), du nez jusqu'au bord de fuite (32), faisant environ 2,5 % à 20 % de la longueur du fuseau.

3. Fuseau réacteur selon la revendication 1 ou 2, comprenant en outre un axe (28) relatif à chaque dispositif de régulation du débit d'air, ledit axe étant relié à chaque corps par au moins un bras de levier (30), ledit axe étant conçu pour subir une rotation sous l'effet d'au moins un des actionneurs de la pluralité d'actionneurs.

4. Fuseau réacteur selon la revendication 3, dans lequel ledit au moins un bras de levier est conçu pour maintenir une relation d'écartement entre le bord de fuite (32) dudit dispositif de régulation du débit d'air et le bord d'attaque de l'entrée du fuseau de façon à former une rainure d'écoulement (34) entre ceux-ci, et facultativement dans lequel la rainure d'écoulement a une largeur (35) faisant environ 0,5% à 5% de la longueur de corde du corps.

5. Fuseau réacteur selon l'une quelconque des revendications précédentes, dans lequel le corps est arqué, le fuseau comprenant facultativement en outre un renfoncement (50) dans un contour externe (46) du fuseau, dont la forme lui permet de recevoir au moins une partie du corps, le nez (31) dudit dispositif de régulation du débit d'air étant sensiblement de niveau avec le contour externe du fuseau.

6. Fuseau réacteur selon l'une quelconque des revendications précédentes, dans lequel le nombre d'actionneurs de la pluralité d'actionneurs est égal au nombre de dispositifs de régulation du débit d'air de la pluralité de dispositifs de régulation du débit d'air, et facultativement dans lequel chaque dispositif de régulation du débit d'air de la pluralité de dispositifs de régulation du débit d'air peut être déployé séparément.

7. Fuseau réacteur selon l'une quelconque des revendications précédentes, dans lequel des groupes sélectionnables de la pluralité de dispositifs de régulation du débit d'air peuvent être déployés simultanément.

8. Fuseau réacteur selon la revendication 7, dans lequel au moins deux des groupes sélectionnables sont situés dans des quadrants inférieurs (54a, 54b) de la circonférence de l'entrée, les au moins deux groupes sélectionnables situés dans des quadrants inférieurs étant adaptés à la prise en charge d'un fort angle d'attaque de l'entrée du fuseau.

9. Fuseau réacteur selon la revendication 7 ou 8, dans lequel au moins deux des groupes sélectionnables sont situés dans des quadrants extérieurs (54a, 54d) de la circonférence de l'entrée, les au moins deux groupes sélectionnables situés dans des quadrants extérieurs étant adaptés à la prise en charge d'un vent de travers extérieur à l'entrée du fuseau.

10. Fuseau réacteur selon l'une quelconque des revendications 7 à 9, dans lequel au moins un des groupes sélectionnables est situé dans un quadrant intérieur (54b, 54c) de la circonférence de l'entrée, l'au moins un groupe sélectionnable situé dans un quadrant intérieur étant adapté à la prise en charge d'un vent de travers intérieur à l'entrée du fuseau.

11. Procédé de régulation du débit d'air d'admission sur un fuseau réacteur comprenant :
le déploiement d'une pluralité de dispositifs de régulation du débit d'air (16) sur le fuseau sous l'effet de la rotation du corps (17) de chaque dispositif de régulation du débit d'air autour du bord d'attaque (18) de l'entrée du fuseau dans au moins un quadrant inférieur (54a, 54b) de la circonférence de l'entrée pour prendre en charge un fort angle d'attaque de l'entrée du fuseau, ledit corps de chaque dispositif de régulation du débit d'air subissant une rotation pour passer d'une position rétractée dans laquelle le nez incurvé mousse (31) dudit dispositif de régulation du débit d'air est situé sur l'arrière par rapport au bord d'attaque de l'entrée du fuseau à une position déployée dans laquelle le nez (31) est situé sur l'avant par rapport audit bord d'attaque.

12. Procédé selon la revendication 11, comprenant en outre le déploiement d'une pluralité de dispositifs de régulation du débit d'air dans au moins un quadrant extérieur (54a, 54d) de la circonférence de l'entrée pour prendre en charge une composante de vent extérieure prédéterminée.

13. Procédé selon la revendication 11 ou 12, comprenant en outre le déploiement d'une pluralité de dispositifs de régulation du débit d'air dans au moins un quadrant intérieur (54b, 54c) de la circonférence de l'entrée pour prendre en charge une composante de vent intérieure prédéterminée.

14. Procédé selon la revendication 11 ou 12, comprenant en outre le déploiement d'une pluralité de dispositifs de régulation du débit d'air dans un quadrant intérieur inférieur (54b) de la circonférence de l'entrée pour prendre en charge une composante de vent intérieure prédéterminée tandis qu'une pluralité de dispositifs de régulation du débit d'air demeurent rétractés dans un quadrant intérieur supérieur (54c).

15. Procédé selon l'une quelconque des revendications 11 à 14, comprenant en outre la rétraction de l'intégralité de la pluralité de dispositifs de régulation du débit d'air lors du dépassement d'une vitesse de vol prédéterminée ou d'une exploitation à un angle d'attaque d'ordre inférieur.
